# EUROPÄISCHE PATENTANMELDUNG

(11) **EP 2 104 012 A1**
(43) Veröffentlichungstag der Anmeldung: **23.09.2009**
(21) Anmeldenummer: 08005174.1
(22) Anmeldetag: 19.03.2008
(51) Int. Cl.: G05B 19/05, G05B 19/042, G05B 23/02, G06F 9/445

(54) **Automatisierungsgerät mit Diagnosefunktionalität**

(71) Anmelder: SIEMENS AKTIENGESELLSCHAFT, 80333 München (DE)
(72) Erfinder: Brandmähl-Estor, Gerd, 91334 Hemhofen (DE); Herla, Werner, 91315 Höchstadt (DE); Hofmann, Klaus-Peter, 91086 Aurachtal-Münchaurach (DE); Winter, Robert, 92355 Velburg (DE)

(57) **Zusammenfassung**

Bei einem erfindungsgemäßen Automatisierungsgerät (1) ist ein Diagnoseprogramm (3) zur Erfassung von Betriebs- und/oder Fehlerzuständen von Hard- (5) und/oder Softwarekomponenten (7) des Automatisierungsgeräts (1) vorgesehen. Das Diagnoseprogramm (3) ist dabei von einem Basic Input Output System (9) des Automatisierungsgeräts (1) umfasst.

## Beschreibung

Die Erfindung betrifft ein Automatisierungsgerät, wobei eine Diagnose von Betriebs- und/oder Fehlerzuständen von Hard-und/oder Softwarekomponenten des Automatisierungsgeräts ermöglicht sein soll.

In modernen Fabriken und Produktionsstätten, aber auch immer mehr zunehmend im privaten Bereich, sind Automatisierungsgeräte kaum mehr wegzudenken.

Automatisierungsgeräte werden dabei beispielsweise zur Automatisierung eines komplexen Fertigungsprozesses eingesetzt, um beispielsweise die Qualität des Fertigungsprozesses zu erhöhen, aber auch um die Kosten zu senken oder die Gefährdung des Bedienpersonals zu reduzieren.

Da es sich bei Automatisierungsgeräten, beispielsweise bei speicherprogrammierbaren Steuerungen (SPS), um prozessorgestützte Geräte handelt, zeigen derartige Geräte das bekannte, leider auch unerwünschte Verhalten von Computersystemen, bei denen Softwarekonflikte oder Hardwareprobleme auftreten können.

Derartige Fehler können bis hin zum kompletten Absturz des Automatisierungsgeräts führen, wodurch dann der komplette automatisierte Prozess unterbrochen ist.

Die Ursachen für derartige Abstürze können in der Hardware, aber auch in der Software liegen, oder auch durch ein Zusammenwirken beider verursacht sein. Um die Ursache für derartige Fehler zu finden, benötigt man oft eine Diagnosesoftware, welche die verschiedenen auftretenden Betriebszustände und Daten der Hard- und Softwarekomponenten des Automatisierungsgeräts sammelt und zur Auswertung bereitstellt bzw. die Auswertung selbst vornimmt.

Automatisierungsgeräte haben meist eine so genannte Firmware, also gewissermaßen ein spezielles Betriebssystem für das Automatisierungsgerät. Die Diagnosesoftware kann dann beispielsweise als Teil dieser Firmware ausgebildet sein. Alternativ ist Diagnosesoftware auch bekannt als eigenständiges, separates Softwaremodul, das über ein Speichermedium in das Automatisierungsgerät geladen werden muss.

Nachteilig bei diesen bekannten Lösungen ist, dass die wesentlichen Hardwarekomponenten des Automatisierungsgeräts zumindest noch so weit funktionieren müssen, dass die Firmware geladen werden kann, oder dass das separat ausgebildete Softwaremodul mit der Diagnosesoftware noch ladefähig ist.

Weiterhin müssten dabei auch die Firmware bzw. das separate Diagnosesoftware-Modul noch so weit funktionsfähig sein, um weiterhin Diagnosedaten einsammeln und bereitstellen zu können. Dies ist jedoch zumindest in einigen Fehlerfällen nicht gewährleistet.

Der Erfindung liegt daher die Aufgabe zugrunde, ein Automatisierungsgerät mit einer verbesserten Diagnosefunktionalität anzugeben. Insbesondere soll dabei die Diagnosefunktionalität in möglichst vielen verschiedenen Fehlerfällen weiterhin zur Verfügung stehen, also vom Fehler nicht betroffen werden können.

Die Aufgabe wird erfindungsgemäß gelöst durch ein Automatisierungsgerät umfassend mindestens ein Diagnoseprogramm zur Erfassung von Betriebs- und/oder Fehlerzuständen von Hard-und/oder Softwarekomponenten des Automatisierungsgeräts, wobei das Diagnoseprogramm von einem Basic Input Output System (BIOS) des Automatisierungsgeräts umfasst ist.

Bei einem erfindungsgemäßen Automatisierungsgerät ist also das Diagnoseprogramm als Teil des BIOS realisiert. Das BIOS ist sehr hardwarenah und es ist ihm gewissermaßen eingeprägt, wo Diagnosedaten abgeholt werden sollen und mit welchen Mechanismen diese Daten zur Verfügung gestellt werden sollen. Einfach gesprochen kann ein Fehlerfall im Zusammenhang mit einem erfindungsgemäßen Automatisierungsgerät nun sehr viel "Peripherie" des Automatisierungsgeräts betreffen, ohne dass die Diagnosefunktionalität verloren geht. Beispielsweise kann nun sogar die Firmware des Automatisierungsgeräts defekt sein, ohne dass die Diagnosefunktionalität abhanden kommt.

Das Basic Input Output System (BIOS) ist bevorzugt ausgebildet als ein Extensible Firmware Interface (EFI). Das EFI ist eine Spezifikation für BIOS-Software, die es erlaubt, sehr einfach und komfortabel Softwaremodule in ein BIOS einzubringen, ohne hierbei Firmware oder Betriebssystem-Peripherie in Betrieb nehmen zu müssen.

Ein Vorteil des erfindungsgemäßen Automatisierungsgeräts besteht darin, dass das Diagnoseprogramm nun nicht mehr separat geladen werden muss. Das Diagnoseprogramm ist gewissermaßen Teil der Hardware (als Teil des BIOS) und steht somit quasi immer zur Verfügung.

Ein weiterer Vorteil ist darin zu sehen, dass Teile der Hardware, die Firmware oder ein anderes Softwaremodul für Diagnosezwecke nicht ablauffähig sein müssen, und trotzdem steht die Diagnosefunktionalität mittels des im BIOS implementierten Diagnoseprogramms zur Verfügung.

In einer weiteren bevorzugten Ausführungsform umfasst das Basic Input Output System weiterhin einen Speicherbereich, bevorzugt einen nicht-flüchtigen Speicherbereich, zur Speicherung der erfassten Betriebs- und/oder Fehlerzustände.

Bei dieser Ausführungsform sind die gespeicherten Betriebs-und/oder Fehlerzustände besonders sicher abgelegt, da sie ebenfalls innerhalb des BIOS gespeichert werden. Somit können diese Daten bei sehr vielen Fehlerfällen nicht verloren gehen.

In einer weiteren Ausführungsform umfasst das Diagnoseprogramm eine TCP/IP-Schnittstelle, so dass die erfassten Betriebs- und/oder Fehlerzustände mittels einer Internetverbindung übertragbar sind.

Alternativ oder in Ergänzung kann das Diagnoseprogramm eine Ethernet-Schnittstelle umfassen, so dass die erfassten Betriebs- und/oder Fehlerzustände mittels einer lokalen Datenverbindung übertragbar sind.

Bei den genannten Ausführungsformen stellt das Automatisierungsgerät die Diagnosedaten für seine Umwelt zur Verfügung. Beispielsweise können diese Diagnosedaten dann mittels eines externen Auswerterechners und/oder Auswerteprogramms detailliert untersucht werden.

Hierbei kann beispielsweise das Diagnoseprogramm, das als Teil des BIOS nun quasi zur Hardware gehört, zumindest bezüglich einer Teilmenge der zum Automatisierungsgerät gehörigen Hardwarekomponenten Diagnosedaten sammeln und weiterleiten. Beispielsweise liest das Diagnoseprogramm einen Diagnosepuffer (Speicherbereich) aus, den eine defekte Firmware des Automatisierungsgeräts beschrieben hat. Über eine direkte BIOS-Ethernet-Verbindung stellt dann das Automatisierungsgerät die Diagnosedaten an seine Umwelt zur Verfügung, beispielsweise für einen lokalen Auswerterechner, der mittels einer Ethernet-Verbindung mit dem Automatisierungsgerät verbunden ist.

Im Folgenden wird ein Ausführungsbeispiel der Erfindung näher dargestellt.

Es zeigt:
- FIGUR: ein erfindungsgemäßes Automatisierungsgerät mit Diagnosefunktionalität.

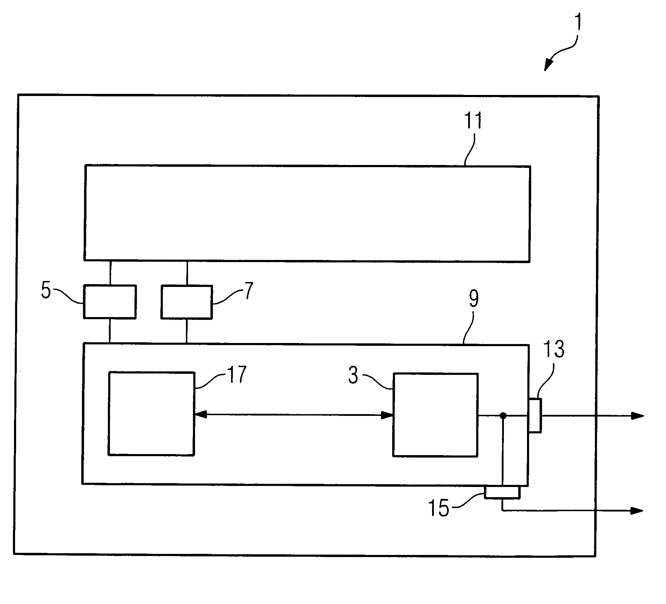

In der Figur ist schematisch ein erfindungsgemäßes Automatisierungsgerät 1 dargestellt, umfassend eine Anzahl an Hardwarekomponenten 5 sowie eine Anzahl an Softwarekomponenten 7.

Zum Betrieb des Automatisierungsgeräts 1 ist eine Firmware 11 vorgesehen. Diese Firmware 11 kann beispielsweise mittels eines steckbaren nicht-flüchtigen Speichers in das Automatisierungsgerät 1 geladen werden. Oder die Firmware 11 ist Teil eines vom Automatisierungsgerät 1 umfassten nicht- flüchtigen Speichers, beispielsweise eines integrierten ROMs.

Weiterhin umfasst das erfindungsgemäße Automatisierungsgerät 1 ein Basic Input Output System (BIOS) 9.

Erfindungsgemäß umfasst das Basic Input Output System 9 ein Diagnoseprogramm 3 zur Erfassung von Betriebs- und/oder Fehlerzuständen der Hard- 5 und/oder Softwarekomponenten 7 des Automatisierungsgeräts 1.

Die Betriebs- und/oder Fehlerzustände werden als Diagnosedaten in einem Speicherbereich 17 abgelegt. Dieser Speicherbereich 17 ist bevorzugt ein nicht-flüchtiger Speicherbereich 17, welcher ebenfalls vom Basic-Input-Output-System 9 umfasst ist.

Das Diagnoseprogramm 3 kann nun die Diagnosedaten auf einfache Weise aus dem Speicherbereich 17 auslesen und beispielsweise mittels einer TCP/IP-Schnittstelle 13 und/oder einer Ethernet-Schnittstelle 15 an die Außenwelt zur weiteren Auswertung übergeben.

Ein Fehler in der Firmware 11 oder in einer Hardwarekomponente 5 des Automatisierungsgeräts 1 erzeugt beispielsweise einen Diagnosepuffereintrag im Speicherbereich 17. Derartige Fehlereinträge im Speicherbereich 17 können dann direkt über das Basic-Input-Output-System 9 gelesen werden. Der Speicherbereich 17 ist dann als Fehlerspeicher auf einfache Weise über die TCP/IP-Schnittstelle 13 und/oder über die Ethernet-Schnittstelle 15 abzufragen.

Zusammengefasst lässt sich somit festhalten, dass die Implementierung des Diagnoseprogramms 3 im Basic Input Output System 9 des Automatisierungsgeräts 1 sehr "fehlertolerant" ist, dass also in sehr vielen verschiedenen Fehlerfällen die Diagnosefunktionalität des Automatisierungsgeräts 1 immer noch zur Verfügung steht.

## Patentansprüche

1. Automatisierungsgerät (1), umfassend mindestens ein Diagnoseprogramm (3) zur Erfassung von Betriebs- und/oder Fehlerzuständen von Hard- (5) und/oder Softwarekomponenten (7) des Automatisierungsgeräts (1),
**dadurch gekennzeichnet, dass** das Diagnoseprogramm (3) von einem Basic Input Output System (9) des Automatisierungsgeräts (1) umfasst ist.

2. Automatisierungsgerät (1) nach Anspruch 1, wobei das Basic Input Output System (9) weiterhin einen Speicherbereich (11), bevorzugt einen nichtflüchtigen Speicherbereich (11), zur Speicherung der erfassten Betriebs- und/oder Fehlerzustände umfasst.

3. Automatisierungsgerät (1) nach Anspruch 1 oder 2, wobei das Diagnoseprogramm (3) eine TCP/IP-Schnittstelle (13) umfasst, so dass die erfassten Betriebs- und/oder Fehlerzustände mittels einer Internetverbindung übertragbar sind.

4. Automatisierungsgerät (1) nach einem der Ansprüche 1 bis 3, wobei das Diagnoseprogramm (3) eine Ethernet-Schnittstelle (15) umfasst, so dass die erfassten Betriebs- und/oder Fehlerzustände mittels einer lokalen Datenverbindung übertragbar sind.

5. Automatisierungsgerät (1) nach einem der Ansprüche 1 bis 4, wobei das Basic Input Output System (9) ausgebildet ist als ein Extensible Firmware Interface.
